# EUROPÄISCHE PATENTANMELDUNG

(11) **EP 2 025 532 A2**
(43) Veröffentlichungstag der Anmeldung: **18.02.2009**
(21) Anmeldenummer: 08013389.5
(22) Anmeldetag: 25.07.2008
(51) Int. Cl.: B43L 1/04, B43L 1/06, A47B 97/00, A47B 97/06, G09F 19/00

(54) **Präsentationssystem**

(30) Priorität: 04.08.2007 DE 202007010920 U
(71) Anmelder: REMONTA Konferenz- und Medien-Raumausstattung GmbH, 57080 Siegen-Eiserfeld (DE)
(72) Erfinder: Nies, Marc, 57074 Siegen (DE)
(74) Vertreter: Ruckh, Rainer Gerhard

(57) **Zusammenfassung**

Die Erfindung betrifft ein Präsentationssystem (1), das ein Pylonenschiebegestell (3) zur höhenverstellbaren Lagerung einer Aktivtafel (2), sowie eine mit der Aktivtafel (2) verbundene Schwenkhalterung (8) zur Lagerung eines Projektors umfasst.

## Beschreibung

Präsentationssysteme der in Rede stehenden Art umfassen wenigstens eine Aktivtafel, das heißt eine Tafel mit einer interaktiven Oberfläche, sowie einen Projektor in Form eines Beamers.

Derartige Aktivtafeln weisen interaktive Oberflächen derart auf, dass diese Tafeln berührungssensitive, elektromagnetische Oberflächen aufweisen, die durch Ausübung von Druck, beispielsweise mittels eines Stifts, eine interaktive Benutzung durch den jeweiligen Benutzer erlauben. Der als weiterer Bestandteil des Präsentationssystems vorgesehene Beamer dient zur Projektion von Bildern auf die Oberfläche der Tafel, wobei die projizierten Informationen durch die interaktive Bedienung der Aktivtafel beeinflussbar sind. Das Präsentationssystem wird durch eine Rechnereinheit komplettiert, die die Steuerung des gesamten Systems übernimmt.

Bei der Installation derartiger Präsentationssysteme besteht generell ein signifikanter Arbeitsaufwand darin, die Aktivtafel und den Beamer in geeigneten Positionen relativ zueinander zu platzieren und auszurichten.

Aus der DE 20 2006 007 109 U1 ist eine höhenverstellbare Pylonentafel bekannt. Diese umfasst mindestens einen feststehenden Pylon mit mindestens einer im Wesentlichen in Längsrichtung des Pylonen verlaufenden Führung und mindestens einer im Wesentlichen vertikal angeordneten Tafelfläche mit mindestens einem Führungselement, wobei die Tafelfläche mittels des Führungselements in der Führung mindestens zwischen einer unteren Position und einer oberen Position verschiebbar ist. Die Tafelfläche ist dabei in der oberen Position bezüglich der Längsachse des Pylonen geneigt.

Dieser Anordnung ist ein Beamer zugeordnet, der an einer Achse befestigt ist. An dieser Achse kann die Pylonentafel mit der Höhenverstellung angehängt werden.

Diese Befestigungsanordnung weist einen konstruktiv hohen Aufwand sowie eine unerwünscht große Bauform auf Weiterhin ist nachteilig, dass die Achse im Bereich einer Raumdecke angeordnet ist, so dass dort die Anbringung der Pylonentafel mit der Höhenverstellung sehr aufwändig ist.

Der Erfindung liegt die Aufgabe zugrunde, ein Präsentationssystem der eingangs genannten Art bereitzustellen, welches flexibel einsetzbar ist und einfach und schnell installiert werden kann.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Präsentationssystem umfasst ein Pylonenschiebegestell zur höhenverstellbaren Lagerung einer Aktivtafel, sowie eine mit der Aktivtafel verbundene Schwenkhalterung zur Lagerung eines Projektors.

Das erfindungsgemäße Präsentationssystem weist durch die Zuordnung des Projektors über die Schwenkhalterung zum Pylonenschiebegestell eine kompakte Bauform auf und kann so einfach und platzsparend installiert werden.

Ein weiterer wesentlicher Vorteil der Erfindung besteht darin, dass durch die Verbindung des Projektors über die Schwenkhalterung ein fester räumlicher Bezug des Projektors zur Aktivtafel gegeben ist, so dass bei Schwenken des Projektors in eine Arbeitsposition dieser bereits korrekt bezüglich der Aktivtafel ausgerichtet ist. Weiterhin kann der Projektor in eine Endposition geschwenkt werden, in welcher er zumindest näherungsweise in der Ebene der Aktivtafel liegt und so wenig Platz beansprucht, wenn das Präsentationssystem gerade nicht benötigt wird.

In einer vorteilhaften Ausgestaltung der Erfindung umfasst die Schwenkhalterung einen in horizontaler Richtung verlaufenden Arm, der bezüglich einer in vertikaler Richtung verlaufenden Schwenkachse geschwenkt werden kann, um so den am Arm gelagerten Projektor relativ zu der in einer vertikalen Ebene orientierten Aktivtafel auszurichten. Um eine Justage des Projektors relativ zu der Aktivtafel zu ermöglichen, ist der Projektor vorteilhaft in Längsrichtung des Armes verstellbar angeordnet. Ein hierfür vorgesehener Gleichmechanismus ermöglicht eine einfach handhabbare und exakte Verstellung des Projektors.

Weiterhin ist vorteilhaft, dass die Aktivtafel zusammen mit dem Projektor an dem Pylonenschiebegestell in der Höhe verstellt werden kann. Damit bleibt bei einer Höhenverstellung der Aktivtafel deren Ausrichtung relativ zum Projektor erhalten.

Besonders vorteilhaft sind in den Pylonen des Pylonenschiebegestells Gegengewichte für die Aktivtafel geführt. Mit diesem System ist eine genaue stufenlose Höhenverstellung der Aktivtafel einfach dadurch möglich, dass eine Bedienperson die Aktivtafel manuell auch oben oder unten führt. Durch die Ausbalancierung der Aktivtafel mit den Gegengewichten verbleibt dann die Aktivtafel in der von der Bedienperson gewählten Position. Ein weiterer Vorteil dieser Höhenverstellung besteht darin, dass diese im Gegensatz zu Federmechanismen und dergleichen völlig verschleißfrei arbeitet. Das Präsentationssystem bildet dabei ein modulares System derart, dass am Pylonenschiebegestell Aktivtafeln unterschiedlicher Größen gelagert werden können, wobei die Gegengewichte entsprechend der Größe und des Gewichts der Aktivtafel gewählt werden.

Weiterhin bildet das Präsentationssystem auch hinsichtlich der möglichen Anbringungsorte ein modulares System und ist daher entsprechend flexibel einsetzbar. So kann das Pylonenschiebegestell wahlweise fest an einer Wand montiert werden oder auf einem fahrbaren Gestell angeordnet sein, so dass das Präsentationssystem eine fahrbare, transportable Einheit bildet. Schließlich kann das Pylonenschiebegestell an einem Schienensystem positionsverstellbar gelagert sein. Dabei ist das Schienensystem bevorzugt an einer Wand montiert und das Pylonenschiebegestell kann dort in vertikaler und horizontaler Richtung verschoben werden.

Die Erfindung wird im Nachstehenden anhand der Zeichnungen erläutert. Es zeigen:
- Figur 1:: Draufsicht auf ein Präsentationssystem mit einem an einem Schienensystem befestigten Pylonenschiebegestell und einem am Pylonenschiebegestell schwenkbar gelagerten Projektor in einer Endposition.
- Figur 2:: Anordnung gemäß Figur 1 mit dem Projektor in einer Arbeitsstellung.
- Figur 3:: Seitenansicht der Anordnung gemäß Figur 2.
- Figur 4:: Präsentationssystem gemäß den Figuren 1 bis 3 auf einem fahrbaren Gestell.
- Figur 5:: Querschnittsdarstellung eines Ausschnitts des Pylonenschiebegestells des Präsentationssystems gemäß den Figuren 1 bis 4.

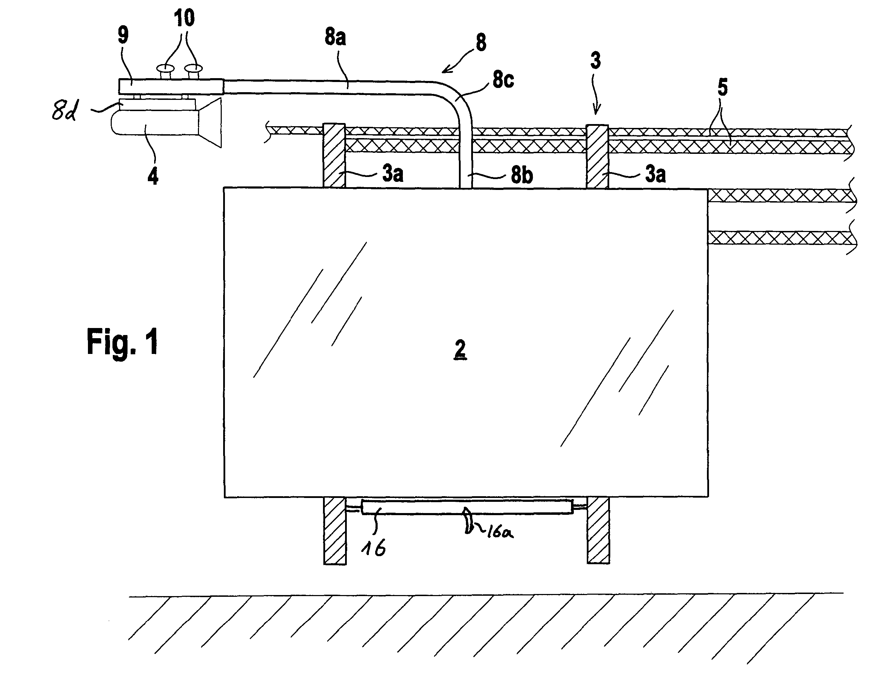

Die Figuren 1 bis 3 zeigen ein Ausführungsbeispiel des erfindungsgemäßen Präsentationssystems 1 in einer ersten Montageversion.

Das Präsentationssystem 1 umfasst eine Aktivtafel 2, die an einem Pylonenschiebegestell 3 gelagert ist, sowie einen am Pylonenschiebegestell 3 schwenkbar gelagerten Projektor, der als Beamer 4 ausgebildet ist.

Die Aktivtafel 2 weist eine Tafelfläche mit einer elektromagnetischen, berührungssensitiven Oberfläche auf, wobei diese Oberfläche in ein Feld von Pixeln unterteilt ist. Segmente dieser Tafelfläche sind durch Druck, zum Beispiel durch einen Stift, aktivierbar. Durch diese Aktivierung werden elektronische Signale generiert. Die Aktivtafel 2 ist wie der Projektor an eine nicht dargestellte Rechnereinheit angeschlossen, so dass die Aktivtafel 2 mit dem Beamer 4 zusammen betrieben werden kann. Die Rechnereinheit übernimmt dabei die Steuerung des Datenverkehrs von mit der Aktivtafel 2 generierten elektronischen Signalen sowie die Ansteuerung des Beamers 4. So können mit dem Beamer 4 auf der Aktivtafel 2 erzeugte Bilder durch Betätigen der Aktivtafel 2 mittels des Stifts beeinflusst werden. Weiterhin können durch den Stift an der Aktivtafel 2 generierte Signale Eingangsgrößen bilden, die mit dem Beamer 4 angezeigt werden.

Das Pylonenschiebegestell 3 weist zwei identisch ausgebildete Pylonen 3a auf, die parallel zueinander in vertikaler Richtung verlaufen. An den Pylonen 3a ist die Aktivtafel 2 höhenverstellbar angeordnet, wobei die Aktivtafel 2 in einer vertikalen Ebene orientiert ist.

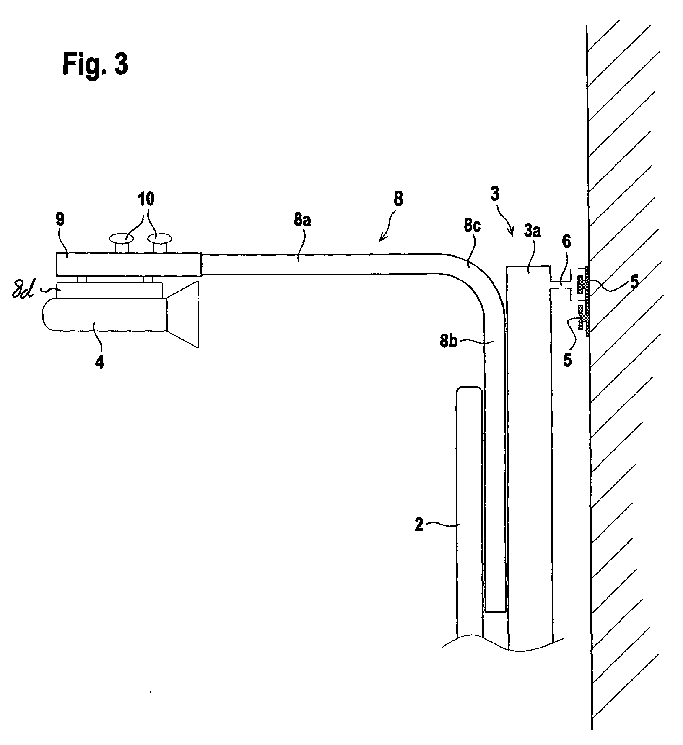

Prinzipiell können die Pylonen 3a direkt an einer Wand eines Raumes, wie eines Büros, Seminarraums und dergleichen, befestigt sein. Bei der Ausführungsform gemäß den Figuren 1 bis 3 sind die Pylonen 3a an Schienen 5 eines Schienensystems befestigt, wobei die Schienen 5 selbst an einer Wand befestigt sind. Die Pylonen 3a sind dabei am Schienensystem positionsverstellbar angeordnet. Wie aus Figur 3 ersichtlich, münden an den Rückseiten der Pylonen 3a Halteelemente 6 aus, die in einer Schiene 5 geführt sind, so dass die Pylonen 3a an der Schiene 5 in horizontaler Richtung verschiebbar angeordnet sind.

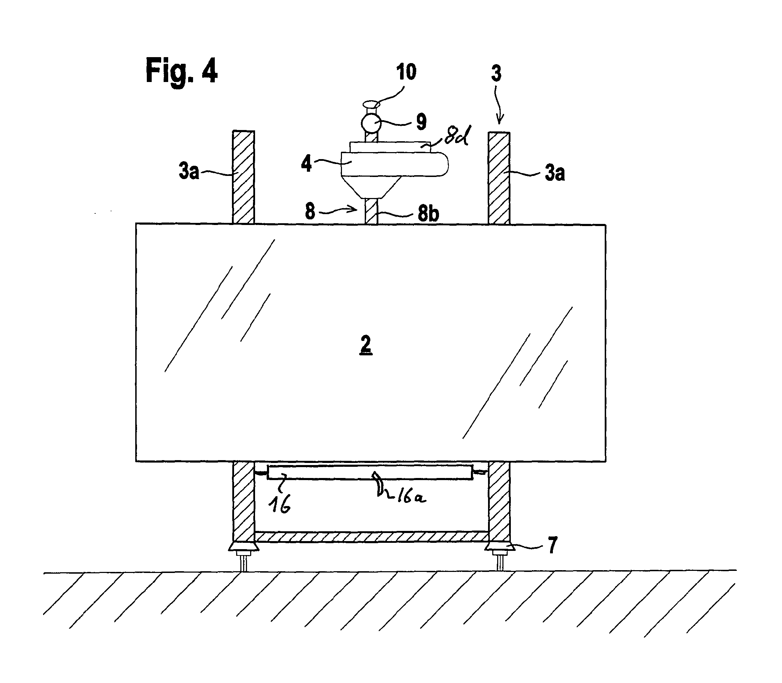

Figur 4 zeigt eine Variante des Präsentationssystems 1. Dort sind die Pylonen 3a des Pylonenschiebegestells 3 auf einem fahrbaren Gestell 7 angeordnet, wodurch ein transportables Präsentationssystem 1 erhalten wird.

Bei dem Präsentationssystem 1 gemäß den Figuren 1 bis 4 ist der Beamer 4 mit der Aktivtafel 2 über eine Schwenkhalterung 8 verbunden, so dass bei Heben und Senken der Aktivtafel 2 am Pylonenschiebegestell 3 der Beamer 4 mit der Aktivtafel 2 bewegt wird.

Die Schwenkhalterung 8 besteht im Wesentlichen aus einem Profilohr, welches einen ersten Teil in Form eines in horizontaler Richtung verlaufenden Armes 8a sowie einen zweiten Teil, der in vertikaler Richtung verläuft und eine Schwenkachse 8b ausbildet, aufweist. Die beiden, jeweils längs einer Geraden verlaufenden Teile sind über ein bogenförmig gekrümmtes Segment 8c des Profilrohrs verbunden.

Der zweite Teil des Profilrohrs verläuft in vertikaler Richtung und ist an der Aktivtafel 2 drehbar gelagert, so dass die so ausgebildete Schwenkachse gedreht werden kann und so der Arm 8a mit horizontal verlaufender Längsachse eine Schwenkbewegung ausführt. Der Arm 8a kann bevorzugt über Einstellmittel in unterschiedlichen Höhenlagen relativ zum Beamer 4 positioniert werden.

Am freien Ende des Armes 8a der Schwenkhalterung 8 ist der Beamer 4 befestigt. Zur Fixierung des Beamers 4 ist ein Halteelement 8d vorgesehen. Das Halteelement 8d ist einstellbar, so dass an diesem Beamer 4 unterschiedlicher Größe befestigt werden können. Im vorliegenden Fall ist der Beamer 4 in Längsrichtung des Armes 8a verschiebbar gelagert. Hierzu ist ein Gleitmechanismus in Form einer Teleskopvorrichtung vorgesehen. Die Teleskopvorrichtung umfasst ein Rohrsegment 9, das auf der Mantelfläche des den Arm 8a bildenden ersten Teils des Profilrohrs verschiebbar gelagert ist. An der Unterseite des Rohrsegments 9 ist der Beamer 4 befestigt. Durch Verschieben des Rohrsegments 9 kann der Beamer 4 in Längsrichtung des Arms 8a verstellt werden. Zur Fixierung einer Sollposition des Beamers 4 sind Arretierungen in Form von Knöpfen 10 vorgesehen.

Durch die Ankopplung des Beamers 4 an die Aktivtafel 2 über die Schwenkhalterung 8 kann der Beamer 4 zwischen Endpositionen und einer Arbeitsposition relativ zur Aktivtafel 2 geschwenkt werden. Wird das Präsentationssystem 1 gerade nicht benötigt, so wird der Beamer 4, wie in Figur 1 dargestellt, in eine Endposition geschwenkt, in welcher der Arm 8a mit dem Beamer 4 im Wesentlichen in der Ebene der Aktivtafel 2 liegt. Somit kann das Präsentationssystem 1 ohne großen Platzbedarf abgestellt werden.

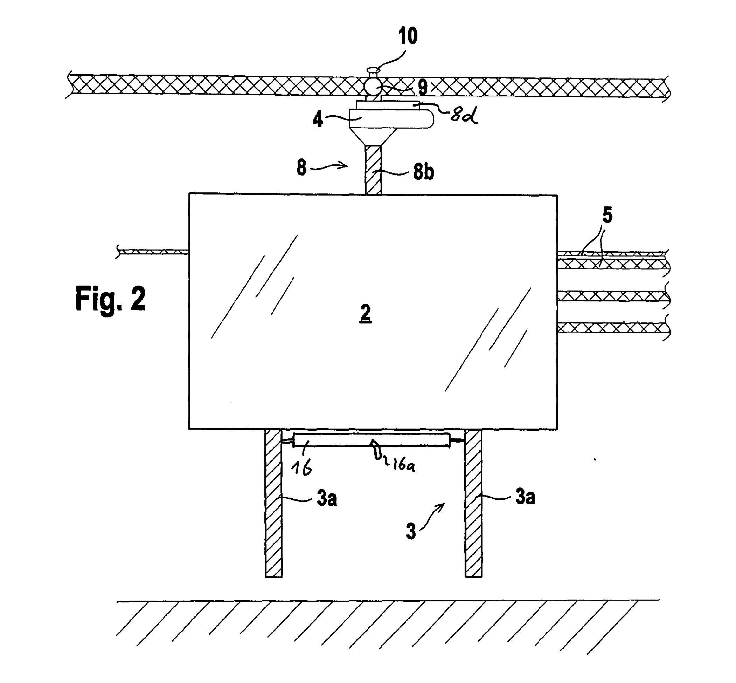

In der Arbeitsposition ist der Arm 8a mit dem Beamer 4 so orientiert, dass die Längsachse des Arms 8a senkrecht von der Ebene der Aktivtafel 2 hervorsteht. Die Figuren 2 bis 4 zeigen den Beamer 4 in seiner Arbeitsposition, wobei besonders in Figur 3 die Orientierung des Arms 8a relativ zur Aktivtafel 2 erkennbar ist.

In der Arbeitsposition befindet sich der Beamer 4 aufgrund der durch die Schwenkhalterung 8 bewirkten Zwangsführung in der für den Betrieb des Präsentationssystems 1 notwendigen Position zur Aktivtafel 2, das heißt eine manuelle Ausrichtung des Beamers 4 relativ zur Aktivtafel 2 ist nicht notwendig. Lediglich eine Feinjustage durch Verstellung des Beamers 4 in Längsrichtung des Armes 8a braucht bei Bedarf vorgenommen werden.

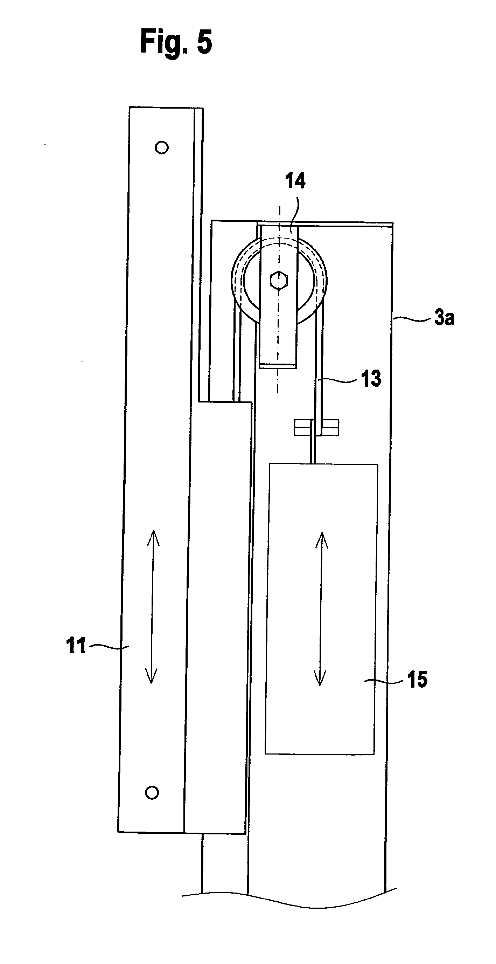

Die Funktion des Höhenverstellungsmechanismus für die Aktivtafel 2 ist aus Figur 5 ersichtlich, welche einen Ausschnitt eines Pylonen 3a des Pylonenschiebegestells 3 zeigt. An dem Pylon 3a ist ein Laufwagen 11 beweglich gelagert, an dessen Vorderseite die in Figur 5 nicht gesondert dargestellte Aktivtafel 2 befestigt wird. Die Mittel zur Befestigung der Aktivtafel 2 weisen bevorzugt Teleskoprohre auf, so dass Aktivtafeln unterschiedlicher Größe insbesondere unterschiedlicher Höhen daran befestigt werden können. Innerhalb des Pylonen 3a ist eine Laufrolle 12 angeordnet, über welche als Zugmittel ein Seil 13 oder dergleichen geführt ist. Die Laufrolle 12 ist an einem Befestigungselement 14 an der Oberseite des Pylonen 3a drehbar gelagert. Ein freies Ende des Seils 13 ist mit dem Laufwagen 11 verbunden. Am anderen Ende des Seils 13 ist ein Gegengewicht 15 befestigt.

Durch die Gegengewichte in den Pylonen 3a ist die Aktivtafel 2 so ausbalanciert, dass bei leichtem manuellen Anheben oder Senken der Aktivtafel 2 diese in der eingestellten Sollposition verbleibt. Damit wird eine einfach handhabbare, verschleißfrei arbeitende Höhenverstellung der Aktivtafel 2 gewährleistet.

Weiterhin kann die Aktivtafel 2 an dem Laufwagen 11 ausgetauscht werden. Entsprechend dem geänderten Gewicht der neuen Aktivtafel 2 werden dann entsprechend auch die Gegengewichte ausgetauscht, um wieder ein ausbalanciertes Gesamtsystem zu erhalten.

Besonders vorteilhaft ist, wie aus den Figuren 1, 2 und 4 ersichtlich, eine Feststellbremse 16 vorgesehen, mittels derer die Aktivtafel 2 in einer bestimmten Höhenposition fixiert werden kann. Die Feststellbremse 16 arbeitet mechanisch und kann mit einem Hebel 16a manuell betätigt werden. Vorzugsweise weist die Feststellbremse 16 Bremsbacken auf, die zur Erzielung der Bremswirkung in Einriff mit den Pylonen 3a gebracht werden können. Durch diese Feststellbremse 16 kann am Pylonenschiebegestell 3 mit unterschiedlichen Gewichten gearbeitet werden.

### Bezugszeichenliste

- (1): Präsentationssystem
- (2): Aktivtafel
- (3): Pylonenschiebegestell
- (3a): Pylonen
- (4): Beamer
- (5): Schiene
- (6): Halteelement
- (7): Gestell
- (8): Schwenkhalterung
- (8a): Arm
- (8b): Schwenkachse
- (8c): Segment
- (8d): Halteelement
- (9): Rohrsegment
- (10): Knopf
- (11): Laufwagen
- (12): Laufrolle
- (13): Seil
- (14): Befestigungselement
- (15): Gegengewicht
- (16): Feststellbremse
- (16a): Hebel

## Patentansprüche

1. Präsentationssystem (1) mit einem Pylonenschiebegestell (3) zur höhenverstellbaren Lagerung einer Aktivtafel (2), sowie einer mit der Aktivtafel (2) verbundenen Schwenkhalterung (8) zur Lagerung eines Projektors.

2. Präsentationssystem nach Anspruch 1, **dadurch gekennzeichnet, dass** das Pylonenschiebegestell (3) zwei Pylonen (3a) aufweist, in welchen jeweils ein mit der Aktivtafel (2) gekoppeltes Gegengewicht (15) zu deren stufenlosen Höhenverstellung geführt ist.

3. Präsentationssystem nach Anspruch 2, **dadurch gekennzeichnet, dass** jedes Gegengewicht (15) am Ende eines Zugmittels befestigt ist, wobei das Zugmittel über eine Laufrolle (12) zur Aktivtafel (2) geführt ist.

4. Präsentationssystem nach Anspruch 3, **dadurch gekennzeichnet, dass** die zweiten Enden des Zugmittels an einem die Aktivtafel (2) aufnehmenden Laufwagen (11) befestigt sind.

5. Präsentationssystem nach Anspruch 4, **dadurch gekennzeichnet, dass** am Laufwagen (11) Aktivtafeln (2) unterschiedlicher Größe anbringbar sind, wobei die Gegengewichte (15) an die Aktivtafel (2) anpassbar sind.

6. Präsentationssystem nach einem der Ansprüche 1 bis 5, **dadurch gekennzeichnet, dass** die Aktivtafel (2) in einer vertikalen Ebene orientiert ist, und dass die Schwenkhalterung (8) einen in horizontaler Richtung verlaufenden Arm (8a) aufweist, an welchem der Projektor fixiert ist.

7. Präsentationssystem nach Anspruch 6, **dadurch gekennzeichnet, dass** der Arm (8a) der Schwenkhalterung (8) bezüglich einer in vertikaler Richtung verlaufende Schwenkachse (8b) schwenkbar ist.

8. Präsentationssystem nach Anspruch 7, **dadurch gekennzeichnet, dass** der Arm (8a) eine Höhenverstellung aufweist.

9. Präsentationssystem nach Anspruch 7 oder 8, **dadurch gekennzeichnet, dass** der Arm (8a) einen ersten Teil eines Profilrohrs bildet, wobei der zweite Teil des Profilrohrs senkrecht zu diesem verläuft und die Schwenkachse (8b) ausbildet.

10. Präsentationssystem nach einem der Ansprüche 6 bis 9, **dadurch gekennzeichnet, dass** der Projektor in Längsrichtung des Armes (8a) verstellbar angeordnet ist.

11. Präsentationssystem nach Anspruch 10, **dadurch gekennzeichnet, dass** zur Verstellung des Projektors ein Gleitmechanismus in Form einer Teleskopvorrichtung vorgesehen ist.

12. Präsentationssystem nach einem der Ansprüche 1 bis 11, **dadurch gekennzeichnet, dass** die Schwenkhalterung (8) ein einstellbares Halteelement (8d) aufweist, an welchem Projektoren unterschiedlicher Größe fixierbar sind.

13. Präsentationssystem nach Anspruch 1 bis 12, **dadurch gekennzeichnet, dass** eine Feststellbremse (16) zur Fixierung der Aktivtafel (2) in einer Sollposition vorgesehen ist.

14. Präsentationssystem nach einem der Ansprüche 1 bis 13, **dadurch gekennzeichnet, dass** das Pylonenschiebegestell (3) an einer Wand befestigbar ist oder auf einem fahrbaren Gestell (7) angeordnet ist.

15. Präsentationssystem nach Anspruch 1 bis 14, **dadurch gekennzeichnet, dass** das Pylonenschiebegestell (3) an einem positionsverstellbaren Schienensystem gelagert ist.
